# EUROPÄISCHE PATENTSCHRIFT

(11) **EP 3 367 694 B1**
(45) Veröffentlichungstag und Bekanntmachung des Hinweises auf die Patenterteilung: **01.04.2020**
(21) Anmeldenummer: 18000008.5
(22) Anmeldetag: 04.01.2018
(51) Int. Cl.: H04Q 9/00

(54) **VERFAHREN ZUM KONFIGURIEREN EINES SMARTMETERING-ZÄHLERS**
METHOD FOR CONFIGURING A SMART METERING COUNTER
PROCÉDÉ DE CONFIGURATION D'UN COMPTEUR INTELLIGENT

(30) Priorität: 24.02.2017 DE 102017001803; 05.05.2017 DE 102017004364
(43) Veröffentlichungstag der Anmeldung: 29.08.2018
(73) Patentinhaber: Diehl Metering Systems GmbH, 90451 Nürnberg (DE)
(72) Erfinder: Petkov, Hristo, DE - 90425 Nürnberg (DE); Lautenbacher, Thomas, DE - 91058 Erlangen (DE); Kauppert, Thomas, DE - 90455 Nürnberg (DE); Gottschalk, Klaus, DE - 90610 Winkelhaid (DE)
(74) Vertreter: Diehl Patentabteilung

(56) Entgegenhaltungen:
- EP-A1- 2 660 564
- US-A1- 2008 062 005
- US-A1- 2011 077 037

## Beschreibung

Beim Smartmetering wird angestrebt, jede Verbrauchsstelle für leitungsgebundene Energieträger wie Strom, Gas, Wasser oder Fernwärme mit einem Zähler für von einem Messwerk verbrauchsabhängig generierte Signale auszustatten, und außerdem mit einem Sendemodul zu drahtloser Nahbereichs-Paketübermittlung des aktuell ackumulierten, digitalisierten Zählerstandes über eines der lizenzfrei zugänglichen ISM-Frequenzbänder an einen Konzentrator. Der empfängt und speichert die von verschiedenen im Empfangsbereich betriebenen Zählern vergleichsweise häufig empfangenen, durch Zähler-Adressen individualisierten Pakete (auch als Telegramme bezeichnet) und führt u.U. eine Vorverarbeitung etwa zur Daten-Plausibilitätskontrolle durch. Mittels Weitbereichs-Datenfunkverbindungen, etwa in einem WLAN- oder insbesondere im Mobilfunk-Standard, werden die in Konzentratoren zwischengespeicherten Daten, vergleichsweise selten, über Mobilfunk-Basisstationen zu einem Server übermittelt, der etwa für die Abrechnungs- oder die Betriebsverwaltungs-Zentrale eines Energieversorgungsunternehmens für diesen Energieträger betrieben wird. Es kann aber auch eine Zwischenspeicherung der vom Konzentrator übermittelten Daten in der "Cloud" erfolgen.

Das Bereitstellen einer unterbrechungsfreien Energieversorgung für den Betrieb des Konzentrators im Smartmetering-Netz stellt in der Praxis kein Problem dar; weshalb auch ein bidirektionaler Funkverkehr zwischen der Zentrale und dem jeweiligen Konzentrator unproblematisch ist. Anders verhält es sich hinsichtlich des Zählers. Denn dessen Energiebedarf ist für Betrieb über die Laufzeit einer Longlife-Batterie ausgelegt, die gewöhnlich einen Batteriewechsel (gegebenenfalls zusammen mit einer Messwerk-Kalibrierung) erst nach zehn Jahren erforderlich machen soll. Um eine derart zugesicherte Laufzeit zuverlässig bieten zu können, kann man sich bei der Datenverbindung zwischen Zähler und Konzentrator mit einer unidirektionalen Uplink-Funkverbindung begnügen, um den höheren Energiebedarf für wechselseitigen Funkverkehr zwischen zwei Transceivern zu vermeiden. Während ein Beschränken auf nur unidirektionale Funkverbindungen für die Paketübermittlungen der Zählerstände von den einzelnen Zählern an den gemeinsamen Konzentrator ohne Nachteil ist, weist solche nur unidirektionale Funkverbindung für die Belange der Praxis doch den Nachteil auf, etwa bei der Erstinstallation eines Zählers mangels Rückmeldemöglichkeiten kein adaptives Optimieren der Betriebsparameter des Zähler-Senders zum Anpassen an die funkrelevant individuellen örtlichen Gegebenheiten am Verbrauchsort und damit am Betriebsort des jeweiligen Zählers durchführen zu können, wo der Zähler etwa in der Nähe eines Störers oder in besonders großem Abstand zum Konzentrator arbeiten muss.

Solche auf nur unidirektionale Informationsübertragung zurückgehenden Einschränkungen treten also nicht auf, wenn gemäß EP 2 660 564 A1 von einem manuellen Lese- und Programmiergerät das Aussenden eines Testsignales initiiert wird, das zum Ansprechen örtlich verteilter Datensender führen soll. Deren Quittungssignale werden an das Lese- und Programmiergerät zurück gefunkt, auf dem dadurch darstellbar ist, welcher Umgebungsbereich durch die gegebene funktechnische Konstellation zum Erfassen von Datensendern abgedeckt wird. Dieser Bereich kann mittels des Lese- und Programmiergerätes durch Variation etwa der Sendeparameter beeinflusst werden.

Bei der hier gattungsbildenden US 2008/0062005 A1 müssen dagegen die Betriebsparameter des Zähler-Senders, wie Leistung, Pegel, Modulationsart oder Sendewiederholungen je nachdem, ob die Kommunikation mit einem mobilen oder stationären Konzentrator erfolgt, mangels Rückmeldung ohne Kontrollmöglichkeiten am Zähler vorgegeben werden. Der verfügt dazu über eine optronische Koppelstelle zum Anschluss eines Programmiergerätes insbesondere in Form eines Laptop.

In Erkenntnis eingangs geschilderter Gegebenheiten liegt vorliegender Erfindung die technische Problemstellung zugrunde, ein quasi bidirektionales und deshalb einfach handhabbares Verfahren zu solchem Konfigurieren eines Smartmetering-Zählers, insbesondere bei dessen Inbetriebnahme, anzugeben.

Diese Aufgabe ist erfindungsgemäß durch das Zusammenwirken der im Hauptanspruch angegebenen Verfahrensschritte gelöst.

Dabei wird davon Gebrauch gemacht, dass handelsübliche - an einem Messwerk betriebene und mit einem Sendemodul versehene - Zähler mit einer Schnittstelle ausgestattet sind, über welche mittels eines externen Steuergerätes funkspezifische Parameter einstellbar und auch Testsendungen an den Konzentrator auslösbar sind. Der Konzentrator kann bei Empfang einer Testsendung über ein Netzwerk, insbesondere über bidirektionale Weitbereichs-Funkverbindungen, in der Zentrale eine Antwort an dasjenige Steuergerät auslösen, das die aktuelle Testsendung ausgelöst hatte. Diese Antwort beinhaltet aktuelle Empfangsinformationen oder schon daraus abgeleitete Optimierungsinformationen für die Sende-Parameter und fällt deshalb danach aus, welche Übertragungsgegebenheiten aktuell nicht nur zwischen Zähler und Konzentrator, sondern auch noch darüber hinaus insbesondere über Mobilfunkverbindungen bis zum Server der Zentrale herrschen. Informationen über solche Gegebenheiten werden über das Netzwerk (wiederum bevorzugt im Mobilfunk-, gegebenenfalls auch im WLAN-Standard) von der Zentrale direkt an das Steuergerät übermittelt. Von diesem werden, zu Optimieren der Zuverlässigkeit der Funkverbindung unter Minimieren von Sendewiederholungen und der erforderlichen Sendeleistung, über eine vorübergehende kontaktlose Kopplung an den Zähler Änderungen gegenüber den aktuellen Funk-Sendeparametern in diesem Zähler bewirkt. Als Kriterien für die Empfangsbeurteilung zumal schon im Konzentrator werden bevorzugt die Empfangsleistung und / oder die Kanalbelegung zugrunde gelegt.

Im Rahmen vorliegender Erfindung kann auch vorgesehen sein, etwa aufgrund von Schätzungen, Empfangs- oder Optimierungsinformationen beziehungsweise schon daraus abgeleitete Steuerungsvorgaben nicht erst von der Zentrale her, sondern bereits vom Konzentrator her, vorzugsweise über ein gesondertes Funkprotokoll, an das Steuergerät am Zähler zurück zu übermitteln. Unabhängig davon kann es zweckmäßig sein, beim Optimieren der Sendeparameter über das nacheinander an die Zähler anzuschließende Steuergerät zunächst die Abstände zwischen den Standorten der jeweiligen Zähler und dem Standort des von mehreren dieser Zähler angesprochenen Konzentrators zu berücksichtigen. Diese Entfernung kann aus Empfangssimulationen oder aus Standortbestimmungen mittels Satellitennavigationen gewonnen werden.

Für das Übermitteln der aktuellen Empfangsinformationen, beziehungsweise daraus gewonnener Erkenntnisse in Form von Optimierungsinformationen, von dem Konzentrator an das Steuergerät kann grundsätzlich der gleiche Kanal herangezogen werden, über den der Zähler mit dem Konzentrator korrespondiert. Allerdings sollte die Trägerfrequenz der Übermittlung dieser die aktuellen Empfangsinformationen beinhaltenden Antwort an das Steuergerät geringfügig verschoben sein, um Störungen, etwa aufgrund von Interferenzerscheinungen, auszuschließen. Generell ist der bidirektionale Funkverkehr über einander benachbarte Kanäle zu bevorzugen. Da die Kanaleigenschaften stark frequenzabhängig sind, sollten jedoch größere Frequenzabstände vermieden werden.

Ein Optimieren der Sende-Parameter fördert die Uplink-Datenverbindung vom Zähler zum Konzentrator durch Vermeiden langer Wartezeiten, während derer benachbarte Zähler Kollisionen verursachen. Schon eine geringe Uplink-Frequenzverschiebung beim Zähler kann Abhilfe schaffen. Denn in der Praxis kann es sonst durchaus bis zu Stunden dauern, bis ein ungestörtes Datentelegramm vom Konzentrator empfangen wird, nach dem dann Sendeparameter optimiert werden können.

Unter seitens des jeweiligen Zählers zu ändernden Parametern zum Optimieren seiner Datenübertragung per Funk werden im Rahmen vorliegender Erfindung nicht nur Sendeleistung, Häufigkeit von Sendewiederholungen, Modulation, Modulationsgrad oder Kodierung verstanden (wie beispielsweise in der DE 601 08 177 T2 im Rahmen eines Mobilfunknetzes näher ausgeführt), dabei sämtlich einzeln oder in Kombinationen, sondern auch Paketlänge und Paketunterteilung in empfangsseitig wieder zusammenzusetzende Subpakete. Auch ein Übergang zwischen wechselnden Wellenformen (Frequenzwechsel- oder Spreizsysteme und dabei Standard- oder Sonder-Wellenformen für unterschiedliche Datenraten und Reichweiten) fällt im Rahmen vorliegender Erfindung unter eine Parameter-Variation zum Optimieren der Datenübertragung vom Zähler an den Konzentrator; ebenso wie eine Beeinflussung der Hauptstrahlrichtung der Sendeantenne oder ein Umschalten zwischen verschiedenen hardware- oder softwaremäßig bereitgestellten Anpassschaltungen.

Aktuell erforderliche oder wenigstens zweckmäßige Parameter-Änderungen nach Betrag und Richtung (Änderungsvektoren) können im Steuergerät aus den in der Zentrale oder im Konzentrator gewonnenen Informationen über die momentane Qualität der Funkverbindung zum Übertragen der Daten-Pakete abgeleitet werden. Um aber nicht zu viel Rechenleistung im Steuergerät für Variation und Auswerten von Funkparametern bei aufeinanderfolgenden Testsendungen vorhalten zu müssen, kann es gemäß einer Weiterbildung der erfindungsgemäßen Lösung zweckmäßiger sein, die im Server der Zentrale ohnehin vorhandene Rechenkapazität auch für Berechnung oder Tabellen-Abruf optimierter Funkparameter in Anspruch zu nehmen und in der Antwort als Empfangsinformationen unmittelbar Vorgaben für Änderungen der aktuellen Funkparameter, insbesondere für die nächste Testsendung, über das Steuergerät an den Zähler zu übermitteln, ohne dass dieser für diese seine Konfiguration mit einem Empfangsmodul zusätzlich zum Sendemodul betrieben werden müsste.

So kann etwa bei der Zähler-Installation oder anlässlich Wartungsarbeiten ein Optimieren der Funkparameter für die gesamte Funkübermittlung erfolgen, also nicht nur über den Nahbereich zum Konzentrator, sondern darüber hinaus auch über den Weitbereich zur Zentrale; das Ergebnis des Vermessens dieser gesamten Funkstrecke uplink vom Zähler über den Konzentrator bis zur Zentrale bestimmt das individuelle Optimieren der Funkparameter in dem entsprechenden Zähler. Mit Standardeinstellungen schwer oder gar nicht auslesbare - aber an den Versorgungsort gebundene - Zähler liefern künftig auswertbare Zählerdaten-Pakete, ohne die Kapazität der Funkzelle durch ständiges Wiederholen von Übertragungsversuchen zu beeinträchtigen. Vorteilhaft ist es dabei, jedenfalls bei räumlich benachbarten Zählern deren Sendemodule mit unterschiedlichen Wellenformen zu betreiben.

Gemäß zusätzlicher zweckmäßiger Weiterbildungen der erfindungsgemäßen Lösung sendet der Zähler im Konfigurationsmodus, also bei angeschlossenem Optimierungs-Steuergerät, zweckmäßigerweise nicht auf seiner regulären Betriebsfrequenz zum Übermitteln von Messwert-Paketen an den Konzentrator. Dadurch wird erreicht, dass die Optimierung der Sende-Parameter beschleunigt wird, weil Funkkollisionen mit dem eigenen System vermieden werden. Dafür genügt schon eine Testfrequenz, die nur derart leicht verschoben ist, dass sich die Übertragungsgegebenheiten im Übrigen dadurch noch nicht signifikant ändern. Vorzugsweise sendet der Zähler in diesem Konfiguratiosbetrieb auf mehreren derart versetzten Frequenzen gleichzeitig oder kurz nacheinander, um ein breiteres Spektrum der aktuellen Übertragungsgegebenheiten für die Parameter-Optimierung zu erfassen.

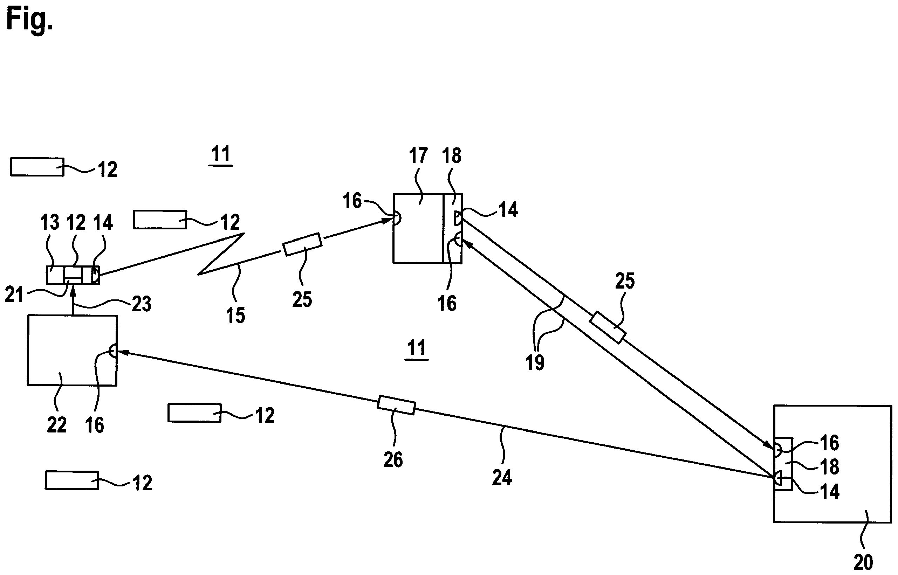

Zusätzliche Alternativen und deren Weiterbildungen ergeben sich aus den weiteren Ansprüchen und, auch unter Berücksichtigung von deren Vorteilen, aus nachstehender Beschreibung der einzigen Zeichnungsfigur, einer blockschaltähnlich auf das Funktionswesentliche abstrahierten Skizze über das Zusammenwirken beim Realisieren des erfindungsgemäßen Konfigurierungsverfahrens.

Ein drahtloses, etwa im Wireless-M-Bus-Standard eingerichtetes Smartmetering-Netz 11 weist eine Anzahl von Zählern 12 auf, die jeder mit einem Messwerk 13 zum Erfassen der Menge eines durchströmenden (fluiden oder elektrischen) Energieträgers ausgestattet sind. Von Zeit zu Zeit wird ein akkumuliertes Zählergebnis als zählerindividualisiertes Paket (auch als Telegramm bezeichnet) mittels eines Sendemodules 14 über das Funkprotokoll 15 einer unidirektionalen Nahbereichs-Funkverbindung wie den WMBUS uplink an ein Empfangsmodul 16 eines Konzentrators 17 übermittelt. Der sendet mittels eines Transceivers 18 die von verschiedenen Zählern 12 empfangenen Informationen - gegebenenfalls nach datentechnischer Vorverarbeitung - in größeren zeitlichen Abständen oder auf Abruf über die bidirektionale Weitbereichs-Funkverbindung eines weiteren Netzwerkes 19, vorzugsweise realisiert als Mobilfunkverbindung im LTE/UMTS-Standard, etwa an den Transceiver 18 des Servers einer Zentrale 20, insbesondere zu dortigem Auswerten der von den einzelnen Zählern 12 des Netzes 11 gelieferten Verbrauchsinformationen. Zur Vereinfachung der Darstellung ist in der Zeichnungsskizze nicht berücksichtigt, dass der wechselseitige Funkverkehr zwischen insbesondere einem Konzentrator 17 und dem Server in der Zentrale 20 in der Praxis tatsächlich nicht direkt erfolgt, sondern gewöhnlich über eine Mobilfunk-Basisstation.

Um die funktechnisch relevanten Sendeparameter im jeweiligen Zähler 12 in Hinblick auf zuverlässige Datenübertragung wenigstens zum Konzentrator 17, aber auch darüber hinaus zur Zentrale 20, möglichst optimal zu konfigurieren, ist an eine Schnittstelle 21 des Zählers 12 ein hier so genanntes Steuergerät 22 kontaktlos angeschlossen, etwa über einen Infrarot- oder einen NFC-Koppler 23. Das Steuergerät 22 seinerseits ist über eine zusätzliche, wenigstens unidirektionale Weitbereichs-Funkverbindung 24 von der Zentrale 20 aus direkt ansprechbar, etwa über eine Mobilfunkverbindung.

Ein vom Zähler 12 über den Konzentrator 17 an die Zentrale 20 gesandtes Verbrauchsdaten-Paket 25 erfährt auf der Uplink-Funkverbindungsstrecke des Funkprotokolles 15 nicht nur Pegeldämpfungen, sondern auch vielfältige temporäre Störeinflüsse in Form von Auslöschungen und von überlagerten Signalen. Derartige Störeinflüsse lassen sich durch Verändern sendeseitiger, oben erörterter Parameter beeinflussen, insbesondere verringern. Solche Maßnahmen sind bekannt, nicht Gegenstand vorliegender Erfindung. Diese löst vielmehr mittels des Einsatzes des bei diesem Realisierungsbeispiel direkt von der Zentrale 20 downlink angesprochenen Steuergerätes 22 das Kommunikationsproblem für ein adaptives, rekursives Konfigurieren der Funkparameter im, erstmals oder nach einem Wartungsintervall, in Betrieb zu nehmenden Zählers 12: Während der Zähler 12 nur über ein vergleichsweise kurzes uplinkunidirektionales Funkprotokoll 15 verfügt, werden seine Sendeparameter über das Steuergerät 22 nach Maßgabe der am Ende der Übertragungsstrecken 15 - 19 uplink in der Zentrale eintreffenden und bewertbaren Informationen konfiguriert.

Durch das erfindungsgemäße Verfahren der vorübergehenden Inbetriebnahme einer Downlink-Funkverbindung 24 in einem Mobilfunk-Protokoll von der Zentrale 20 an den einzurichtenden Zähler 12 über das dazu angekoppelte Steuergerät 22 ist über eine Serie von seitens des Steuergerätes 22 ausgelösten Test-Paketen 25 ein iteratives Optimieren der Funkparameter für das Nahbereichs-Funkprotokoll 15 zum Konzentrator 17 möglich, so als handele es sich hier um eine bidirektionale Funkverbindung, und das unter Berücksichtigung der Einflüsse sogar noch darüber hinaus im Weitbereichs-Funkverkehr zur Zentrale 20.

In einem Smartmetering-Netz 11 erfahren also insbesondere gerade neu installierte Zähler 12 ihre Konfiguration erfindungsgemäß durch Verändern von Funk-Parametern für das Senden von Zählerdaten-Paketen 25 über ein lizenzfrei verfügbares, unidirektionales WMBUS-Funkprotokoll 15 an einen Konzentrator 17 und von diesem weiter, etwa über Weitbereichs-Netzwerke 19 wie im Mobilfunkstandard, an den Server in einer Headend-Zentrale 20. Von der Zentrale 20 aus wird über eine zusätzliche solche Weitbereichs-Funkverbindung 24, oder schon vom Konzentrator 17 aus über entsprechend kürzere Distanz, eine aus aktuellen Empfangsinformationen gewonnene Optimierungsinformation 26 für die Sende-Parameter an ein Steuergerät 22 übermittelt. Das ist über einen bevorzugt kontaktlosen Koppler 23 vorübergehend an eine Schnittstelle 21 des Zählers 12 angeschlossen worden, um dessen Funk-Parameter nach Maßgabe der aufeinanderfolgenden Optimierungsinformationen 26 iterativ für die jeweiligen Folgesendungen zu beeinflussen; nämlich im Sinne einer Optimierung hinsichtlich insbesondere Sendeleistungsbedarfes und Empfangsfehlerraten beispielsweise bis zum Einhalten schaltungstechnisch oder im Steuerprogramm vorgegebener Grenzwerte oder bis zum Erreichen eines Optimums. Die aktuelle Optimierungsinformation 26 für eine anstehende Parameter-Änderung zur nächstfolgenden Testpaket-Aussendung des Zählers 12 kann aus den momentanen Empfangsgegebenheiten im Steuergerät 22 selbst ermittelt oder ihm von der Zentrale 20, oder vom Konzentrator 17, übermittelt werden. Die jüngsten, danach keiner Veränderung mehr unterworfenen Sende-Parameter werden schließlich im Zähler 12 für den künftigen Betrieb dessen Sendemoduls 14 abgespeichert.

### Bezugszeichenliste

- 11: Smartmetering-Netz
- 12: Zähler
- 13: Messwerk (von 12)
- 14: Sendemodule
- 15: Funkprotokoll (uplink von 12 nach 17)
- 16: Empfangsmodule
- 17: Konzentrator
- 18: Transceiver (von 17 oder 20)
- 19: Netzwerke (uplink von 17 nach 20, downlink von 20 nach 17)
- 20: Zentrale (mit Server)
- 21: Schnittstelle (an 12, für 22)
- 22: Steuergerät
- 23: Koppler (von 22 über 21 an 12)
- 24: Weitbereichs-Funkverbindung (downlink von 20 nach 22)
- 25: Paket
- 26: Optimierungsinformationen

## Patentansprüche

1. Verfahren zum Konfigurieren eines Zählers (12) in einem Smartmetering-Netz (11) durch Einstellen von seinen Funk-Parametern für Senden von Paketen (25) über ein unidirektionales Funkprotokoll (15) an einen Konzentrator (17) und von diesem über weitere Netzwerke (19) an den Server einer Zentrale (20), wobei in vorübergehendem Konfigurationsmodus des Zählers (12) ein Steuergerät (22) über einen Koppler (23) an den Zähler (12) angeschlossen wird, um dessen Funk-Parameter für Folgesendungen abhängig vom Abstand zum nächsten Konzentrator (17) oder von aktuellen Empfangssituationen zu beeinflussen, **dadurch gekennzeichnet, dass** die Funk-Parameter beim Zähler (12) zusätzlich zur Empfangssituation am Konzentrator (17) auch von den Übertragungsgegebenheiten vom Konzentrator (17) zum Server der Zentrale (20) beeinflusst werden, wofür diese Gegebenheiten, oder daraus gewonnene Optimierungsinformationen (26) für die Sende-Parameter des Zählers (12), von der Zentrale (20) über eine Weitbereichs-Funkverbindung (24) an das Steuergerät (22) übermittelt werden.

2. Verfahren nach Anspruch 1, **dadurch gekennzeichnet, dass** die Empfangssituation im Konzentrator (17) geschätzt und als Optimierungsinformation (26) an das Steuergerät (22) übermittelt wird.

3. Verfahren nach Anspruch 2, **dadurch gekennzeichnet, dass** die Empfangssituation aufgrund von im Konzentrator (17) empfangener Leistung oder von aktueller Kanalbelegung beurteilt wird.

4. Verfahren nach Anspruch 1, **dadurch gekennzeichnet, dass** Abstände zwischen einzelnen Zählern (12) und dem Konzentrator (17) aufgrund von Simulationen abgeschätzt werden.

5. Verfahren nach Anspruch 1, **dadurch gekennzeichnet, dass** Abstände zwischen einzelnen Zählern (12) und dem Konzentrator (17) mittels Satellitennavigations-Standortbestimmungen ermittelt werden.

6. Verfahren nach Anspruch 1, **gekennzeichnet durch** Verwendung des WMBUS für das unidirektionale Funkprotokoll (15) vom jeweiligen Zähler (12) zum Konzentrator (17).

7. Verfahren nach Anspruch 2, **gekennzeichnet durch** Verwendung eines Mobilfunkprotokolles wie des LTE/UMTS-Standards für weitere Netzwerke (19, 24) zu der und von der Zentrale (20).

8. Verfahren nach Anspruch 1, **dadurch gekennzeichnet, dass** im Steuergerät (22) aus, vom Konzentrator (17) oder von der Zentrale (20) übermittelten, Empfangsinformationen oder aus daraus bereits abgeleiteten Optimierungsinformationen (26) Kriterien für Sendeparameter-Änderungen im Zähler (12) abgeleitet werden.

9. Verfahren nach einem der vorangehenden Ansprüche, **dadurch gekennzeichnet, dass** der Sendemodul (14) des Zählers (12) vom Steuergerät (22) zwischen unterschiedlichen Sendehäufigkeiten, Sendeleistungen, Modulationen, Kodierungen, Anpassschaltungen, Antennenabstrahlrichtungen und / oder Wellenformen umgeschaltet wird.

10. Verfahren nach Anspruch 1, **dadurch gekennzeichnet, dass** der Zähler (12) in seinem Konfigurationsmodus nicht auf seiner regulären Betriebsfrequenz sendet.

11. Verfahren nach Anspruch 10, **dadurch gekennzeichnet, dass** der Zähler (12) in seinem Konfigurationsmodus auf einer gegenüber der Betriebsfrequenz leicht verschobenen Frequenz sendet.

12. Verfahren nach Anspruch 10 und / oder 11, **dadurch gekennzeichnet, dass** der Zähler (12) in seinem Konfigurationsmodus auf mehreren Frequenzen gleichzeitig oder kurz nacheinander sendet.

13. Verfahren nach Anspruch 10 und / oder 11, **dadurch gekennzeichnet, dass** die Sendefrequenz des Zählers (12) in Abhängigkeit von der aktuellen Kanalbelegung adaptiv verändert wird.

## Claims

1. Method for configuring a meter (12) in a smart metering network (11) by setting its radio parameters for transmitting packets (25), using a unidirectional radio protocol (15), to a concentrator (17) and, from the latter, to the server of a control centre (20) via further networks (19), wherein a control device (22) is connected to the meter (12) via a coupler (23) in a temporary configuration mode of the meter (12) in order to influence its radio parameters for subsequent transmissions on the basis of the distance to the next concentrator (17) or on the basis of current reception situations, **characterized in that**, in addition to the reception situation at the concentrator (17), the radio parameters in the meter (12) are also influenced by the transmission conditions from the concentrator (17) to the server of the control centre (20), for which purpose these conditions or optimization information (26) obtained therefrom for the transmission parameters of the meter (12) is/are transmitted from the control centre (20) to the control device (22) via a long-range radio connection (24).

2. Method according to Claim 1, **characterized in that** the reception situation in the concentrator (17) is estimated and is transmitted as optimization information (26) to the control device (22).

3. Method according to Claim 2, **characterized in that** the reception situation is assessed on the basis of power received in the concentrator (17) or current channel assignment.

4. Method according to Claim 1, **characterized in that** distances between individual meters (12) and the concentrator (17) are estimated on the basis of simulations.

5. Method according to Claim 1, **characterized in that** distances between individual meters (12) and the concentrator (17) are determined by means of satellite navigation location determinations.

6. Method according to Claim 1, **characterized by** the use of the WMBUS for the unidirectional radio protocol (15) from the respective meter (12) to the concentrator (17).

7. Method according to Claim 2, **characterized by** the use of a mobile radio protocol, such as the LTE/UMTS standard, for further networks (19, 24) to and from the control centre (20).

8. Method according to Claim 1, **characterized in that** criteria for transmission parameter changes in the meter (12) are derived in the control device (22) from reception information transmitted from the concentrator (17) or the control centre (20) or from optimization information (26) already derived from said reception information.

9. Method according to one of the preceding claims, **characterized in that** the transmission module (14) of the meter (12) is changed over between different transmission periodicities, transmission powers, modulations, codings, matching circuits, antenna emission directions and/or waveforms by the control device (22).

10. Method according to Claim 1, **characterized in that** the meter (12) does not transmit at its regular operating frequency in its configuration mode.

11. Method according to Claim 10, **characterized in that** the meter (12) transmits at a frequency slightly shifted with respect to the operating frequency in its configuration mode.

12. Method according to Claim 10 and/or 11, **characterized in that** the meter (12) transmits at a plurality of frequencies at the same time or in short succession in its configuration mode.

13. Method according to Claim 10 and/or 11, **characterized in that** the transmission frequency of the meter (12) is adaptively changed on the basis of the current channel assignment.

## Revendications

1. Procédé de configuration d'un compteur (12) dans un réseau à comptage communiquant (11) par réglage de ses paramètres radioélectriques pour l'émission de paquets (25) par le biais d'un protocole radio unidirectionnel (15) à un concentrateur (17) et depuis celui-ci, par le biais de réseaux supplémentaires (19), au serveur d'une centrale (20), un contrôleur (22) étant raccordé au compteur (12) par le biais d'un coupleur (23) dans un mode de configuration temporaire du compteur (12) afin d'influencer ses paramètres radioélectriques pour les émissions suivantes en fonction de la distance jusqu'au concentrateur (17) suivant ou des situations de réception actuelles, **caractérisé en ce que** les paramètres radioélectriques au niveau du compteur (12), en plus de la situation de réception au niveau du concentrateur (17), sont également influencés par les circonstances de transmission du concentrateur (17) au serveur de la centrale (20), ces circonstances, ou des informations d'optimisation (26) obtenues à partir de celles-ci pour les paramètres radioélectriques du compteur (12), étant communiquées à cet effet par la centrale (20) au contrôleur (22) par le biais d'une liaison radioélectrique de longue portée (24).

2. Procédé selon la revendication 1, **caractérisé en ce que** la situation de réception dans le concentrateur (17) est estimée et communiquée au contrôleur (22) en tant qu'information d'optimisation (26).

3. Procédé selon la revendication 2, **caractérisé en ce que** la situation de réception est évaluée sur la base de la puissance reçue dans le concentrateur (17) ou de l'occupation de canal actuelle.

4. Procédé selon la revendication 1, **caractérisé en ce que** les distances entre les compteurs (12) individuels et le concentrateur (17) sont estimées sur la base de simulations.

5. Procédé selon la revendication 1, **caractérisé en ce que** les distances entre les compteurs (12) individuels et le concentrateur (17) sont identifiées au moyen de déterminations de l'emplacement par navigation par satellite.

6. Procédé selon la revendication 1, **caractérisé par** l'utilisation du WMBUS pour le protocole radio unidirectionnel (15) du compteur (12) respectif au concentrateur (17).

7. Procédé selon la revendication 2, **caractérisé par** l'utilisation d'un protocole de radiocommunication mobile tel que la norme LTE/UMTS pour les réseaux supplémentaires (19, 24) vers et depuis la centrale (20).

8. Procédé selon la revendication 1, **caractérisé en ce que** des critères pour les modifications des paramètres d'émission dans le compteur (12) sont dérivés dans le contrôleur (22) à partir d'informations de réception communiquées par le concentrateur (17) ou par la centrale (20) ou à partir d'informations d'optimisation (26) dérivées à partir de celles-ci.

9. Procédé selon l'une des revendications précédentes, **caractérisé en ce que** le module d'émission (14) du compteur (12) est permuté par le contrôleur (22) entre différentes périodicités d'émission, puissances d'émission, modulations, codages, circuits d'adaptation, directions de rayonnement d'antenne et/ou formes d'onde.

10. Procédé selon la revendication 1, **caractérisé en ce que** dans son mode de configuration, le compteur (12) n'émet pas sur sa fréquence de fonctionnement habituelle.

11. Procédé selon la revendication 10, **caractérisé en ce que** dans son mode de configuration, le compteur (12) émet sur une fréquence légèrement décalée par rapport à la fréquence de fonctionnement.

12. Procédé selon la revendication 10 et/ou 11, **caractérisé en ce que** dans son mode de configuration, le compteur (12) émet sur plusieurs fréquences simultanément ou se suivant à courts intervalles.

13. Procédé selon la revendication 10 et/ou 11, **caractérisé en ce que** la fréquence d'émission du compteur (12) est modifiée de manière adaptative en fonction de l'occupation de canal actuelle.
